# EUROPEAN PATENT APPLICATION

(11) **EP 4 844 827 A1**
(43) Date of publication of application: **25.11.2026**
(21) Application number: 25855552.3
(22) Date of filing: 27.02.2025
(51) Int. Cl.: H01M 4/136, H01M 4/133, H01M 4/62, H01M 10/42, H01M 10/0525

(54) **BATTERY CELL, BATTERY DEVICE, AND ELECTRIC DEVICE**

(30) Priority: 22.08.2024 CN 202411162594
(71) Applicant: Contemporary Amperex Technology Co., Limited, Ningde, Fujian 352100 (CN)
(72) Inventor: JING, Erdong, Ningde, Fujian 352100 (CN); HE, Yong, Ningde, Fujian 352100 (CN); XIE, Haotian, Ningde, Fujian 352100 (CN); LIU, Huanji, Ningde, Fujian 352100 (CN); DONG, Kangyu, Ningde, Fujian 352100 (CN); WEI, Kangjing, Ningde, Fujian 352100 (CN); CHEN, Xiao, Ningde, Fujian 352100 (CN)
(74) Representative: Aera A/S
(86) International application number: PCT/CN2025/079597
(87) International publication number: WO 2026/040374

(57) **Abstract**

The present application discloses a battery cell, a battery device, and an electric device. The battery cell comprises a positive electrode sheet and a negative electrode sheet; the positive electrode sheet comprises a positive electrode active material layer; the positive electrode active material layer comprises a positive electrode active material and a lithium supplementing agent; on a cross section in the thickness direction of the positive electrode sheet, the maximum diameter of positive electrode active material particles accounting for more than 50% in number is smaller than the minimum diameter of lithium supplementing agent particles; the negative electrode sheet comprises a negative electrode active material layer; the negative electrode active material layer comprises a negative electrode active material; the volume particle size distribution Dv90 of the negative electrode active material is 15 µm-30 µm; and the negative electrode active material includes graphite.

## Description

### CROSS-REFERENCE TO RELATED APPLICATIONS

The present application claims priority to Chinese Patent Application No. 202411162594.6, filed on August 22, 2024, which is incorporated herein by reference in its entirety.

### TECHNICAL FIELD

The present application relates to the technical field of batteries, and specifically relates to a battery cell, a battery device, and an electric device.

### BACKGROUND

Secondary batteries are not only applied to energy storage power systems such as hydropower, thermal power, wind power, and solar power stations, but also widely applied to electric transportation vehicles such as electric bicycles, electric motorcycles, or electric cars, as well as military equipment, aerospace, and other fields. With the ongoing development of society, people are placing increasingly higher demands on batteries, such as high energy efficiency or long service life.

### SUMMARY

In view of the technical problems existing in the background, the present application provides a battery cell, aiming to achieve high energy efficiency and a long service life.

To achieve the above object, a first aspect of the present application provides a battery cell, including:
a positive electrode sheet including a positive electrode active material layer, where the positive electrode active material layer includes a positive electrode active material and a lithium supplementing agent, and on a cross section in the thickness direction of the positive electrode sheet, the maximum diameter of over 50% by number of positive electrode active material particles is smaller than the minimum diameter of lithium supplementing agent particles;
a negative electrode sheet including a negative electrode active material layer, where the negative electrode active material layer includes a negative electrode active material, a volume particle size distribution Dv90 of the negative electrode active material is 15 µm to 30 µm, and the negative electrode active material includes graphite.

The battery cell according to the first aspect of the present application has at least the following beneficial effects: The positive electrode sheet and the negative electrode sheet are simultaneously designed to allow the maximum diameter of the positive electrode active material particles and the minimum diameter of the lithium supplementing agent particles to satisfy the above range. Moreover, the negative electrode active material particles having a volume particle size distribution Dv90 satisfying the above range are used. This improves the uniformity of lithium ion deintercalation from the positive electrode on the basis of positive electrode lithium supplementation, and enables lithium ions deintercalated from the positive electrode to be rapidly and uniformly intercalated into the negative electrode sheet while reducing side reactions on the negative electrode. As a result, the risk of lithium plating on the negative electrode sheet is reduced, and the lithium supplementation effect and kinetic performance of the battery are improved, thereby enabling the battery to simultaneously have high energy efficiency and long service life.

In some embodiments of the present application, the OI value of the graphite is 2 to 5. Thus, it is beneficial to lithium ion intercalation, thereby improving the kinetic performance of the battery.

In some embodiments of the present application, the volume average particle size Dv50 of the graphite is 6 µm to 12 µm. Therefore, it is beneficial to shortening the transport path of lithium ions in the graphite bulk phase, thereby improving the kinetic performance of the battery.

In some embodiments of the present application, the lithium supplementing agent includes LiₓM1_{y}O_{z}, where 1 ≤ x ≤ 6, 1 ≤ y ≤ 6, 2 ≤ z ≤ 12, and M1 includes one or more of an Na element, an Ni element, a Co element, an Mn element, an Al element, and an Fe element.

In some embodiments of the present application, the lithium supplementing agent includes one or more of Li₂NiO₂ and Li₅FeO₄. Thus, a good lithium supplementation effect is achieved.

In some embodiments of the present application, the lithium supplementing agent includes one or more of LiₙNiOₘ and LiₚFeO_{q}, where 0 ≤ n ≤ 2, 0 < m ≤ 2, 0 < p ≤ 5, and 0 < q ≤ 4.

In some embodiments of the present application, the lithium supplementing agent includes one or more of NiOₘ and LiₚFeO_{q}, where 0 < m ≤ 2, 0 < p ≤ 1, and 0 < q ≤ 2.

In some embodiments of the present application, a coating layer is provided on at least part of the surface of the lithium supplementing agent, and the coating layer includes one or more of a C element, an Al element, a Zr element, a P element, and an S element. Thus, not only is the air stability of the lithium supplementing agent enhanced and the generation of lithium-containing impurities on the surface thereof reduced, but also the kinetic performance thereof is enhanced, thereby facilitating delithiation.

In some embodiments of the present application, the coating layer includes one or more of a carbon material, an aluminum oxide, a zirconium oxide, a lithium phosphide, and a lithium sulfide.

In some embodiments of the present application, the lithium supplementing agent further includes a doping element, and the doping element includes one or more of an Al element, a Zr element, and a B element. Thus, it is not only beneficial to reducing the decomposition voltage of the lithium supplementing agent and enhancing the decomposition capability thereof, thereby enabling the lithium supplementing agent to provide more capacity compensation, but also beneficial to stabilizing the crystal structure of the lithium supplementing agent after decomposition, reducing the dissolution of transition metals and possible side reactions with the electrolytic solution.

In some embodiments of the present application, based on the total mass of the lithium supplementing agent, the contents of the Al element, the Zr element, and the B element in the lithium supplementing agent are each independently 50 ppm to 1000 ppm.

In some embodiments of the present application, the compaction density of the positive electrode active material layer is 2.1 g/cm³ to 2.5 g/cm³. Thus, it is beneficial to the infiltration of the electrolytic solution, thereby improving the ionic conductivity.

In some embodiments of the present application, the single-side coating weight of the positive electrode active material layer is 0.25 g/1540.25 mm² to 0.3 g/1540.25 mm². Thus, it is beneficial to reducing the polarization of the electrode sheet, thereby improving the kinetic performance of the battery.

In some embodiments of the present application, the compaction density of the negative electrode active material layer is 1.2 g/cm³ to 1.5 g/cm³. Thus, it is beneficial to the infiltration of the electrolytic solution, thereby improving the ionic conductivity.

In some embodiments of the present application, the single-side coating weight of the negative electrode active material layer is 0.12g/1540.25 mm² to 0.15 g/1540.25 mm². Thus, it is beneficial to reducing the polarization of the electrode sheet, thereby improving the kinetic performance of the battery.

In some embodiments of the present application, the battery cell further includes: an electrolytic solution. The electrolytic solution includes a solvent, the solvent includes a cyclic carbonate and a linear carbonate, and based on the total mass of the electrolytic solution, the mass percentage of the cyclic carbonate is 15% to 25%, and the mass percentage of the linear carbonate is 50% to 70%. Thus, it is beneficial to enhancing the stability of the electrolytic solution, thereby improving the kinetic performance of the battery.

In some embodiments of the present application, the electrolytic solution further includes a lithium salt, and the concentration of the lithium salt is 0.6 mol/L to 1.2 mol/L, optionally 0.7 mol/L to 1 mol/L. Thus, it is beneficial to achieving high ionic conductivity, thereby improving the kinetic performance of the battery.

In some embodiments of the present application, the electrolytic solution further includes fluoroethylene carbonate and vinylene carbonate.

In some embodiments of the present application, the mass content of the fluoroethylene carbonate in the electrolytic solution is 0.1% to 0.2%, and the mass content of the vinylene carbonate in the electrolytic solution is 1% to 1.5%.

In some embodiments of the present application, the battery cell further includes: a separator. The separator includes a base film, and a coating is provided on at least one side of the base film.

In some embodiments of the present application, the thickness of the separator is 7 µm to 14 µm. Thus, it is beneficial to simultaneously taking into account the puncture strength of the separator and the energy density of the battery.

In some embodiments of the present application, the thickness of the separator is 10 µm to 12 µm.

In some embodiments of the present application, the positive electrode active material includes a polyanionic positive electrode active material. Thus, it is beneficial to increasing the cycle life of the battery.

In some embodiments of the present application, the positive electrode active material layer further includes: a conductive agent. The conductive agent includes one or more of conductive carbon black and carbon nanotubes. Thus, not only is the conductive performance of the electrode sheet enhanced, but also the decomposition of the lithium supplementing agent and the enhancement of the kinetic performance of the battery are facilitated.

In some embodiments of the present application, the positive electrode active material includes a lithium iron phosphate-based material.

A second aspect of the present application provides a battery device, including: the battery cell according to the first aspect of the present application. The battery device includes at least one of a battery module, a battery pack, and an energy storage device.

A third aspect of the present application provides an electric device, including: the battery cell according to the first aspect of the present application or the battery device according to the second aspect of the present application. The battery cell or the battery device is configured to provide electric energy.

### BRIEF DESCRIPTION OF THE DRAWINGS

The foregoing and/or additional aspects and advantages of the present application will become apparent and easily understood from the description of the embodiments in conjunction with the following accompanying drawings, in which:
FIG. 1 is a scanning electron microscope image of a cross section of a positive electrode sheet in a battery cell according to one embodiment of the present application;
FIG. 2 is a scanning electron microscope image of a cross section of a positive electrode sheet in a battery cell according to another embodiment of the present application;
FIG. 3 is a schematic structural diagram of a battery cell according to one embodiment of the present application;
FIG. 4 is a schematic structural diagram of a battery module according to one embodiment of the present application;
FIG. 5 is a schematic structural diagram of a battery pack according to one embodiment of the present application;
FIG. 6 is an exploded view of FIG. 5; and
FIG. 7 is a schematic diagram of an embodiment of an electric device in which a battery device is used as a power source according to the present application.

### Description of the reference numerals:

1: battery cell; 2: battery module; 3: battery pack; 4: upper case body; 5: lower case body; 10: lithium supplementing agent; and 11: coating layer.

### DETAILED DESCRIPTION

The present application will be further described below in conjunction with specific embodiments. It should be understood that these specific embodiments are merely used for describing the present application and are not intended to limit the scope of the present application.

Reference in the present application to an "embodiment" means that a particular feature, structure, or characteristic described in conjunction with the embodiment is included in at least one embodiment of the present application. The appearances of the phrase at various positions in the specification do not necessarily refer to the same embodiment, nor to an independent or alternative embodiment mutually exclusive with other embodiments. It will be explicitly and implicitly understood by a person skilled in the art that the embodiments described in the present application are combined with other embodiments.

A "range" disclosed in the present application is defined in the form of a lower limit and/or an upper limit. A given range is defined by selecting a lower limit and/or an upper limit, and the selected lower limit and/or upper limit define boundaries of a particular range. The range defined in this manner includes or excludes an end value, and is arbitrarily combined, that is, any lower limit is combined with any upper limit to form a range that is not clearly recorded, any lower limit is combined with another lower limit to form a range that is not clearly recorded, and similarly, any upper limit is combined with any other upper limit to form a range that is not clearly recorded. In addition, each separately disclosed point or single value itself serves as a lower limit or an upper limit to be combined with any other point or single value or to be combined with another lower limit or upper limit to form a range that is not clearly recorded.

Unless otherwise specified, all embodiments and optional embodiments of the present application are combined with one another to form new technical solutions, and such technical solutions shall be considered to be included in the disclosure of the present application.

Unless otherwise specified, all technical features and optional technical features of the present application are combined with one another to form new technical solutions, and such technical solutions shall be considered to be included in the disclosure of the present application.

Unless otherwise specified, all steps of the present application are performed sequentially or randomly, preferably sequentially. For example, the method includes steps S1 and S2, which indicates that the method includes steps S1 and S2 performed sequentially, or includes steps S2 and S1 performed sequentially. For example, the mentioned method further includes step S3, which indicates that step S3 is added to the method in any sequence. For example, the method includes steps S1, S2, and S3, or includes steps S1, S3, and S2, or includes steps S3, S1, and S2.

Unless otherwise specified, the term "and/or" in the present application describes only an association relationship between associated objects and represents that three relationships exist. For example, A and/or B represent the following three cases: Only A exists, both A and B exist, and only B exists. In addition, the character "/" herein generally indicates an "or" relationship between the associated objects.

In this application, the terms "a plurality of" and "multiple" mean two or more than two.

Unless otherwise defined, all technical and scientific terms used in the present application have the same meaning as commonly understood by a person skilled in the art to which the present application belongs. The terms used in the present application are only intended to describe objectives of specific examples, but are not intended to limit the present application. The terms "include", "have", and any other variants thereof in the description and claims of the present application are intended to cover a non-exclusive inclusion. Unless otherwise specified, the terms used in the present application have well-known meanings that are commonly understood by a person skilled in the art. Unless otherwise specified, the values of the parameters mentioned in the present application are measured by various measurement methods commonly used in the art (for example, may be tested according to methods provided in the embodiments of the present application).

With the continuous advancement of green and environmental protection themes, batteries have been widely used in all aspects of life, including vehicles, electronic devices, energy storage devices, etc. However, with the continuous popularization of battery applications, people have put forward increasingly high requirements for batteries. For example, taking lithium-ion batteries as an example, secondary batteries with high energy efficiency and long service life have become an important research direction in the battery industry. In existing battery systems, a solution to improve the cycle stability and reliability of the battery and prolong the service life of the battery involves using lithium iron phosphate as a positive electrode active material in combination with graphite as a negative electrode. However, this solution suffers from relatively rapid capacity fading in the early stages due to the low initial Coulombic efficiency of graphite and the consumption of active lithium in the SEI film stabilization process, making it difficult to adequately meet increasingly high demands of customers for long service life.

The present application aims to develop a battery cell simultaneously having high energy efficiency and a long service life. In the battery cell of the present application, a lithium supplementing agent is added to the positive electrode sheet, and a particle size relationship between the lithium supplementing agent and the positive electrode active material in the positive electrode sheet, as well as the volume particle size distribution of the negative electrode active material in the electrode sheet, are comprehensively controlled, thereby developing a battery cell having high energy density and long service life.

In the positive electrode sheet of the present application, the positive electrode active material layer includes a positive electrode active material and a lithium supplementing agent. On a cross section in the thickness direction of the positive electrode sheet, the maximum diameter of more than 50% by number of the positive electrode active material particles is smaller than the minimum diameter of the lithium supplementing agent particles. In the negative electrode sheet, the volume particle size distribution Dv90 of the negative electrode active material is 15 µm to 30 µm, and the negative electrode active material includes graphite.

Introducing the lithium supplementing agent improves the initial Coulombic efficiency and cycle performance of the battery cell, and increases the cycle life and service life of the battery cell. However, if the lithium supplementing agent is not uniformly dispersed in the positive electrode active material layer, non-uniform delithiation of lithium in the positive electrode sheet is easily caused, which increases the risks of lithium plating and dendrite formation on the negative electrode. Moreover, if lithium ions deintercalated from the positive electrode sheet cannot be rapidly and uniformly intercalated into the negative electrode active material layer, the kinetic performance of the battery is also weakened, which increases the risks of lithium plating and dendrite formation. In the present application, by means of appropriately increasing the particle size of the lithium supplementing agent particles to ensure that the maximum diameter of above half of the positive electrode active material particles is smaller than the minimum diameter of the lithium supplementing agent particles, the dispersion uniformity of the lithium supplementing agent in the positive electrode active material layer is effectively increased. As a result, lithium ions are uniformly deintercalated during delithiation of the positive electrode sheet, thereby reducing the risk of lithium plating on the negative electrode that arises from localized high lithium ion concentration caused by clustered lithium ion deintercalation. In addition, if the particle size of the negative electrode active material particles is relatively large, the intercalation path of lithium ions is lengthened, and the difficulty of lithium intercalation is increased. In contrast, if the particle size of the negative electrode active material particles is relatively small, the negative electrode active material features high surface activity and brings a high risk of side reactions. By means of using the negative electrode active material particles having a volume particle size distribution Dv90 of 15 µm to 30 µm, lithium ions deintercalated from the positive electrode are promoted to be rapidly and uniformly intercalated into the negative electrode sheet, and side reactions on the negative electrode are reduced. Thus, the battery cell is enabled to simultaneously have high energy efficiency, good cycle performance, and long service life.

The battery cell disclosed in the embodiments of the present application is used in an electric device in which the battery cell or a battery device having the battery cell is used as a power source, or in various energy storage systems in which the battery cell or a battery device having the battery cell is used as an energy storage element. The electric device includes, but is not limited to, a mobile phone, a tablet computer, a laptop computer, an electric toy, an electric tool, an electric bicycle, an electric car, a ship, a spacecraft, etc. The electric toy includes a stationary or mobile electric toy, for example, a game console, a toy electric vehicle, a toy electric ship, a toy electric airplane, etc. The spacecraft includes an airplane, a rocket, a space shuttle, a spaceship, etc.

A first aspect of the present application provides a battery cell, including: a positive electrode sheet and a negative electrode sheet. The positive electrode sheet includes a positive electrode active material layer, the positive electrode active material layer including a positive electrode active material and a lithium supplementing agent, and on a cross section in the thickness direction of the positive electrode sheet, a maximum diameter of over 50% by number of the positive electrode active material particles being smaller than a minimum diameter of the lithium supplementing agent particles; and the negative electrode sheet includes a negative electrode active material layer, the negative electrode active material layer including a negative electrode active material, a volume particle size distribution Dv90 of the negative electrode active material being 15 µm to 30 µm, and the negative electrode active material including graphite.

To enhance the cycle performance of the battery and achieve a long cycle life and long service life, a lithium supplementing agent generally needs to be introduced. The lithium supplementing agent provides additional lithium in the first charging process to compensate for the lithium consumed in forming an SEI film, thereby improving the initial Coulombic efficiency and cycle performance. However, if the lithium supplementing agent is not uniformly distributed in the positive electrode active material layer, non-uniform lithium deintercalation is easily caused, which increases the risks of lithium plating and dendrite formation. This not only affects the kinetic performance of the battery, but also affects the energy efficiency and cycle life of the battery. To address this issue, a relative particle size relationship between the lithium supplementing agent and the positive electrode active material particles is regulated. Compared with mixing the lithium supplementing agent particles and the positive electrode active material particles with comparable particle sizes, forming a particle size gradation between the lithium supplementing agent and the positive electrode active material particles effectively increases the dispersion uniformity of the lithium supplementing agent in the positive electrode active material layer. The particle size of positive electrode active material (such as lithium iron phosphate) particles is generally made very small. However, the processing of lithium supplementing agent particles with smaller particle sizes is more difficult, and the risk of agglomeration between small-sized lithium supplementing agent particles and small-sized positive electrode active material particles is higher. This also increases the risk of non-uniform lithium ion deintercalation. In the present application, by means of appropriately increasing the particle size of the lithium supplementing agent particles to ensure that the maximum diameter of above half of the positive electrode active material particles is smaller than the minimum diameter of the lithium supplementing agent particles, a particle size gradation is formed between the lithium supplementing agent and the positive electrode active material particles, which effectively increases the dispersion uniformity of the lithium supplementing agent in the positive electrode active material layer. As a result, lithium ions are uniformly deintercalated during delithiation of the positive electrode sheet, thereby reducing the risk of lithium plating on the negative electrode that arises from localized high lithium ion concentration caused by clustered lithium ion deintercalation.

Moreover, if lithium ions deintercalated from the positive electrode sheet cannot be rapidly and uniformly intercalated into the negative electrode active material layer, the kinetic performance of the battery is also weakened, which increases the risks of lithium plating and dendrite formation on the negative electrode. On this basis, to enable the lithium ions deintercalated from the positive electrode sheet to be rapidly and uniformly intercalated into the negative electrode sheet, negative electrode active particles in a suitable particle size range need to be used. If the particle size of the negative electrode active material particles is relatively large, the intercalation path of lithium ions is lengthened, and the difficulty of lithium intercalation is increased, which is not beneficial to the enhancement of the kinetic performance of the battery and the reduction of the risk of lithium plating. In contrast, if the particle size of the negative electrode active material particles is relatively small, the negative electrode active material features high surface activity and brings a high risk of side reactions, which tends to deteriorate the energy efficiency, cycle life, and kinetic performance of the battery. In the present application, on the basis of ensuring that the particle sizes of the positive electrode active material and the lithium supplementing agent in the positive electrode sheet satisfy the above given range, the negative electrode active material particles having a volume particle size distribution Dv90 of 15 µm to 30 µm are used. This not only improves the uniformity of lithium ion deintercalation from the positive electrode on the basis of positive electrode lithium supplementation, but also enables the lithium ions deintercalated from the positive electrode to be rapidly and uniformly intercalated into the negative electrode sheet while reducing side reactions on the negative electrode. As a result, the lithium supplementation effect and kinetic performance of the battery are improved, thereby enabling the battery to simultaneously have high energy efficiency, good cycle performance, and long service life.

Thus, the battery cell according to the first aspect of the present application has at least the following beneficial effects: The battery cell enables the battery to simultaneously have high energy efficiency and long service life.

Illustratively, the volume particle size distribution Dv90 of the negative electrode active material is 15 µm, 17 µm, 19 µm, 21 µm, 23 µm, 25 µm, 28 µm, 30 µm, etc.

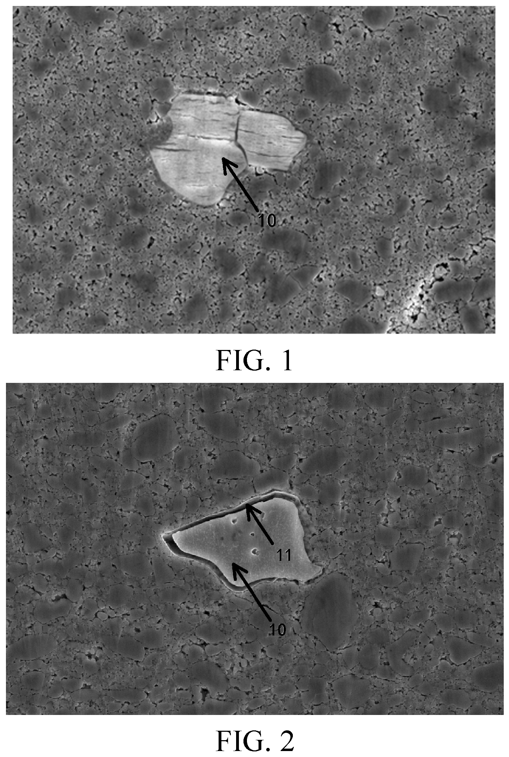

Illustratively, on a cross section in the thickness direction of the positive electrode sheet, the maximum diameter of 50%, 60%, 70%, 80% or more by number of the positive electrode active material particles is smaller than the minimum diameter of the lithium supplementing agent particles (referring to FIG. 1 for understanding, FIG. 1 shows a scanning electron microscope image of a cross section of a positive electrode sheet of a battery cell according to one embodiment of the present application, which shows the particle morphology of the lithium supplementing agent 10 and the positive electrode active material).

In the present application, the minimum diameter of the lithium supplementing agent particles and the maximum diameter of the positive electrode active material particles are defined as follows: A positive electrode sheet including the lithium supplementing agent particles and the positive electrode active material particles is cut in the thickness direction of the electrode sheet to expose a cross section of the positive electrode active material layer, and a scanning electron microscope (SEM) test is performed on the cross section of the positive electrode active material layer to determine the minimum diameter of the lithium supplementing agent particles and the maximum diameter of the positive electrode active material particles. Specifically, the minimum diameter of the lithium supplementing agent refers to the shortest straight line that passes through the center point of the lithium supplementing agent particle and extends to the periphery of the particle, and the maximum diameter of the positive electrode active material refers to the longest straight line that passes through the center point of the positive electrode active material particle and extends to the periphery of the particle. In the present application, the minimum diameter of the lithium supplementing agent particles and the maximum diameter of the positive electrode active material particles are tested by the following method: selecting lithium supplementing agent particles from the cross-section image of the positive electrode active material layer, and measuring the minimum diameters of the lithium supplementing agent particles; and selecting positive electrode active material particles from the cross-section image of the positive electrode active material layer, and measuring the maximum diameters of a plurality of positive electrode active material particles.

In the present application, qualitative analysis is performed on the positive electrode active material layer by using one or more of conventional instruments and conventional methods such as a scanning electron microscope, an EDS spectrometer, an X-ray diffractometer, and an inductively coupled plasma optical emission spectrometer, to determine whether a lithium supplementing agent exists in the positive electrode active material layer and the type of the lithium supplementing agent. For example, in the positive electrode active material layer, in addition to differences in elemental composition, the lithium supplementing agent and the positive electrode active material particles generally also differ in particle size and particle morphology. Moreover, the lithium supplementing agent does not completely disappear after delithiation, but instead leaves behind residual elements and a particle skeleton. The lithium supplementing agent generally undergoes a certain degree of volume shrinkage after delithiation, forming a gap between the remaining particle skeleton and the surrounding region thereof (referring to FIG. 2, which is a scanning electron microscope image of a cross section of a positive electrode sheet in a battery cell according to another embodiment of the present application, showing the microscopic morphology of the lithium supplementing agent 10 having a coating layer 11 after delithiation, where a gap is formed between the particle skeleton of the lithium supplementing agent 10 and the coating layer 11 on the surface thereof at the late stage of delithiation). Based on the above differences, the possible locations of the lithium supplementing agent in a cross section of the positive electrode sheet in the thickness direction thereof are rapidly identified during a scanning electron microscope test. In combination with EDS energy spectrum analysis, the lithium supplementing agent particles are distinguished from the positive electrode active material particles by elemental composition, thereby enabling a comparison of size differences between the particle size of the positive electrode active material particles and that of the lithium supplementing agent particles. For another example, the surface roughness of the positive electrode active material particles and that of the lithium supplementing agent particles are generally also different, and this difference is also used in combination to rapidly screen for possible locations of the lithium supplementing agent during a scanning electron microscope test. For yet another example, the lithium supplementing agent is generally not completely delithiated after formation. By means of comparing the changes in diffraction peaks (such as peak position, peak intensity, etc.) in the XRD patterns of the positive electrode active material layer samples before and after charging and discharging, it is preliminarily determined whether a lithium supplementing agent is added to the positive electrode sheet and the type of the lithium supplementing agent added. In addition, due to differences in the lithium content of the lithium supplementing agent and the positive electrode active material per se, as well as differences in the lithium intercalation/deintercalation efficiencies thereof during charging and discharging, the lithium contents thereof in the fully charged and fully discharged states are also different. For example, in a charged state, the deintercalation efficiency of the lithium supplementing agent in the positive electrode sheet is generally lower than that of the positive electrode active material, and this difference is characterized and distinguished by FIB (focused ion beam) combined with an SIMS (secondary ion mass spectrometry) test. Moreover, in a single charge-discharge cycle, the difference in lithium deintercalation efficiency between the lithium supplementing agent and the positive electrode active material leads to a significant difference in volume expansion between the material particles, and this difference is observed and characterized by *in-situ* confocal microscopy.

In the present application, the particle size of the negative electrode active material in the negative electrode active material layer is tested using conventional instruments such as a particle size analyzer (such as a laser particle size analyzer). For example, the negative electrode active material layer is separated from the negative electrode current collector by a wet method and/or ultrasonication, so as to obtain the negative electrode active material particles.

In the battery cell of the present application, on a cross section in the thickness direction of the positive electrode sheet, it is required that the maximum diameter of over 50% by number of the positive electrode active material particles is smaller than the minimum diameter of the lithium supplementing agent particles. This can also reserve design margin for further increasing the energy density and service life of the battery cell. For example, a small number of large-diameter positive electrode active material particles are used in combination with the above positive electrode active material particles whose maximum diameter is smaller than the minimum diameter of the lithium supplementing agent particles to form a particle size gradation, thereby further improving the energy density of the battery and prolonging the service life of the battery.

In some embodiments of the present application, the OI value of the graphite is 2 to 5, for example, 2, 2.5, 3, 3.5, 4, 4.5, or 5. The OI value of the graphite material is calculated by an XRD test. A low OI value of graphite indicates that the number of end surfaces for lithium ion deintercalation/intercalation in the graphite is large, which is beneficial to lithium ion intercalation, thereby improving kinetic performance. Thus, allowing the OI value of graphite to satisfy the given range is beneficial to further improving the kinetic performance of the battery.

In some embodiments of the present application, the volume average particle size Dv50 of the graphite is 6 µm to 12 µm, for example, 7 µm, 8 µm, 9 µm, 10 µm, 11 µm, or 12 µm. The volume average particle size Dv50 of the graphite is also measured using a particle size analyzer. Graphite with a small particle size has a short lithium ion transport path, which is beneficial to further improving the kinetic performance of the battery.

In some embodiments of the present application, the volume average particle size Dv50 of the negative electrode active material is 6 µm to 12 µm, for example, 7 µm, 8 µm, 9 µm, 10 µm, 11 µm, or 12 µm. Thus, it is beneficial to further improving the kinetic performance of the battery.

In some embodiments of the present application, the lithium supplementing agent includes LiₓM1_{y}O_{z}, where 1 ≤ x ≤ 6, 1 ≤ y ≤ 6, 2 ≤ z ≤ 12, and M1 includes one or more of an Na element, an Ni element, a Co element, an Mn element, an Al element, and an Fe element. For example, the value of x is 1, 2, 3, 4, 5, 6, etc., or a range formed by any of the foregoing values. Optionally, the value of x satisfies 1 < x ≤ 6, for example, 2 ≤ x ≤ 5. The value of y is 1, 2, 3, 4, 5, 6, etc., or a range formed by any of the foregoing values. The value of z is 2, 3, 4, 5, 6, 7, 8, 9, 10, 11, 12, etc., or a range formed by any of the foregoing values. Optionally, the value of z satisfies 2 ≤ z ≤ 8. The specific charge capacity of LiₓM1_{y}O_{z} is 1-5 times that of the multi-element positive electrode active material, which can provide additional lithium in the first charging process. In addition, it is also beneficial to pre-storing additional lithium in the negative electrode, thereby prolonging the service life of the battery. Incorporating LiₓM1_{y}O_{z} into the positive electrode active material layer achieves a good lithium supplementation effect. It will be understood that during the formation and service of the battery, as the lithium supplementation process proceeds, the lithium in the lithium supplementing agent is partially or completely released, causing the lithium supplementing agent to transition from an initial state to a partially delithiated state or a fully delithiated state. In this case, the conditions of x ≤ 1 and/or z ≤ 2 are satisfied.

In some embodiments of the present application, the lithium supplementing agent includes, but is not limited to, one or more of Li₂NiO₂ and Li₅FeO₄. In the manufacturing process of the positive electrode sheet, Li₂NiO₂ and/or Li₅FeO₄ are directly incorporated into the positive electrode active material layer. After delithiation, Li₂NiO₂ is converted into LiNiO₂, which has lithium intercalation/deintercalation capability. LiNiO₂ transforms into Li₁₋ₓ₁NiO₂ in a delithiated state, where 0 ≤ x1 ≤ 1, and reverts to LiNiO₂ in a lithiated state. Li₅FeO₄ has a strong lithium supplementing capability, and the LiFeO₂ formed after delithiation does not cause significant side reactions. Thus, using Li₂NiO₂ and/or Li₅FeO₄ as the lithium supplementing agent achieves a good capacity compensation effect. Illustratively, the lithium supplementing agent is Li₂NiO₂. Li₂NiO₂ can provide a considerable lithium supplementing capacity only through the valence change of Ni atoms at a relatively low potential, without relying on the valence change of oxygen atoms to provide capacity, thereby reducing the risk of oxidation of the electrolytic solution by oxygen radicals.

In some embodiments of the present application, the lithium supplementing agent has an initial state, a partially delithiated state, and a fully delithiated state. When the lithium supplementing agent transitions from the initial state to the partially delithiated state or the fully delithiated state, the lithium supplementing agent includes one or more of LiₙNiOₘ and LiₚFeO_{q}, where 0 ≤ n ≤ 2, 0 < m ≤ 2, 0 < p ≤ 5, and 0 < q ≤ 4. For example, the value of n is 0, 0.5, 1, 1.5, 2, etc., or a range formed by any of the foregoing values. The value of m is 0.5, 1, 1.5, 2, etc., or a range formed by any of the foregoing values. The value of p is 0.5, 1, 2, 3, 4, 5, etc., or a range formed by any of the foregoing values. The value of q is 1, 2, 3, 4, etc., or a range formed by any of the foregoing values. Illustratively, taking the lithium supplementing agent having Li₂NiO₂ in the initial state as an example, when the lithium in Li₂NiO₂ is partially deintercalated, the composition of the lithium supplementing agent LiₙNiOₘ includes one or more of components satisfying 0 < n < 1, n = 1, or 1 < n < 2; and when the lithium in Li₂NiO₂ is fully deintercalated, the composition of the lithium supplementing agent LiₙNiOₘ includes NiOₘ. Taking the lithium supplementing agent having Li₅FeO₄ in the initial state as an example, when the lithium in Li₅FeO₄ is partially deintercalated, the composition of the lithium supplementing agent LiₚFeO_{q} includes one or more of components satisfying 1 < p < 2, 2 ≤ p < 3, 3 ≤ p < 4, or 4 ≤ p < 5; and when lithium in Li₅FeO₄ is completely deintercalated, the composition of the lithium supplementing agent LiₚFeO_{q} includes LiFeO₂. Under factors such as polarization, LiFeO₂ undergoes further deintercalation, resulting in LiₚFeO_{q} components satisfying p < 1.

In some embodiments of the present application, when the lithium supplementing agent transitions from the initial state to the fully delithiated state, the lithium supplementing agent includes one or more of NiOₘ and LiₚFeO_{q}, where 0 < m ≤ 2, 0 < p ≤ 1, and 0 < q ≤ 2. For example, the value of m is 0.5, 1, 1.5, 2, etc., or a range formed by any of the foregoing values. The value of p is 0.2, 0.5, 0.8, 1, etc., or a range formed by any of the foregoing values. The value of q is 0.2, 0.5, 1, 1.5, 2, etc., or a range formed by any of the foregoing values. Illustratively, taking the lithium supplementing agents having Li₂NiO₂ and Li₅FeO₄ in the initial state as examples, when the lithium supplementing agents are fully delithiated, the lithium supplementing agents after delithiation include, but are not limited to, NiO and/or LiFeO₂.

In some embodiments of the present application, a coating layer is provided on at least part of the surface of the lithium supplementing agent, and the coating layer includes one or more of a C element, an Al element, a Zr element, a P element, and an S element. Qualitative analysis is performed on element types in the coating layer of the lithium supplementing agent by characterization methods such as EDS energy spectrum analysis. The lithium supplementing agent generally has poor air stability. Taking Li₂NiO₂ as an example, the lithium supplementing agent has strong basicity and is prone to react with water and CO₂. On the one hand, forming a coating layer on the surface of the lithium supplementing agent enhances the air stability thereof and reduces the generation of lithium-containing impurities on the surface. On the other hand, such a coating layer enhances the ionic conductivity of the lithium supplementing agent, improves lithium ion transport efficiency, and enhances kinetic performance, thereby further facilitating delithiation and improving the lithium supplementing capacity.

In some embodiments of the present application, the coating layer includes one or more of a carbon material, an aluminum oxide, a zirconium oxide, a lithium phosphide, and a lithium sulfide. The type of the coating layer material is determined by one or more of analytical methods such as EDS energy spectrum analysis and X-ray diffraction. The lithium supplementing agent has poor electrical conductivity. Using the carbon material, aluminum oxide, or zirconium oxide as the coating layer material is beneficial to enhancing the air stability of the lithium supplementing agent and reducing the generation of lithium-containing impurities on the surface. In addition, using the carbon material as the coating layer material is beneficial to improving the electrical conductivity of the positive electrode sheet. Using a fast ionic conductor, such as a lithium phosphide or a lithium sulfide (illustratively, including lithium phosphate, lithium sulfate, etc.), as a coating layer material is beneficial to improving the lithium ion transport rate and enhancing kinetic performance, thereby further facilitating delithiation and improving the lithium supplementing capacity. Therefore, it is beneficial to further improving the electrochemical performance of the battery.

In some embodiments of the present application, the lithium supplementing agent further includes a doping element, and the doping element includes one or more of an Al element, a Zr element, and a B element. Incorporating one or more of an Al element, a Zr element, and a B element into the lithium supplementing agent is not only beneficial to reducing the decomposition voltage of the lithium supplementing agent and enhancing the decomposition capability thereof, thereby enabling the lithium supplementing agent to provide more capacity compensation, but also beneficial to stabilizing the crystal structure of the lithium supplementing agent after decomposition, reducing the dissolution of transition metals and possible side reactions with the electrolytic solution, thereby further enabling the battery to simultaneously have high energy efficiency and long cycle life.

In some embodiments of the present application, based on the total mass of the lithium supplementing agent, the contents of the Al element, the Zr element, and the B element in the lithium supplementing agent are each independently 50 ppm to 1000 ppm, for example, 50 ppm, 200 ppm, 500 ppm, 800 ppm, 1000 ppm, etc.

In some embodiments of the present application, the positive electrode active material layer further includes: a conductive agent. The conductive agent includes one or more of conductive carbon black and carbon nanotubes. The lithium supplementing agent has poor electrical conductivity. Carbon nanotubes exhibit better conductive performance than conductive carbon black, but are relatively more costly. Combining zero-dimensional conductive carbon black with one-dimensional carbon nanotubes as the conductive agent not only facilitates the dispersion of the carbon nanotubes, but also forms a more effective conductive network, thereby achieving good conductive performance. Thus, not only is the conductive performance of the electrode sheet enhanced, but also the decomposition of the lithium supplementing agent and the enhancement of the kinetic performance of the battery are facilitated.

In some embodiments of the present application, the positive electrode active material includes a polyanionic positive electrode active material. Optionally, the positive electrode active material includes, but is not limited to, a lithium iron phosphate-based positive electrode active material. It will be understood that the lithium iron phosphate-based positive electrode active material includes, but is not limited to, doped or undoped lithium iron phosphate and lithium iron manganese phosphate materials. For example, the general structural formula of the polyanionic material is Liₓ₂FeₐMn_{b}M2_{c}O₄, where 0.5 ≤ x2 ≤ 1.2, a+b+c = 1, 0.5 ≤ a ≤ 1, 0 ≤ b ≤ 0.5, 0 ≤ c ≤ 0.1, and M2 is a transition metal element. Optionally, M2 includes one or more of V, Cr, Ni, Co, Cu, Al, and Zr. Illustratively, for example, the value of x2 is 0.5, 0.6, 0.7, 0.8, 0.9, 1, 1.1, 1.2, etc., or a range formed by any of the foregoing values. The value of a is 0.5, 0.6, 0.7, 0.8, 0.9, 1, etc., or a range formed by any of the foregoing values. The value of b is 0, 0.1, 0.2, 0.3, 0.4, 0.5, etc., or a range formed by any of the foregoing values. The value of c is 0, 0.02, 0.05, 0.08, 0.1, etc., or a range formed by any of the foregoing values. Qualitative and quantitative analyses are performed on the positive electrode active material layer by using one or more of conventional instruments and conventional methods such as a scanning electron microscope, an EDS spectrometer, an X-ray diffractometer, and an inductively coupled plasma optical emission spectrometer, to determine the type of the positive electrode active material. Compared with ternary positive electrode active materials, the lithium iron phosphate-based positive electrode active material has a more stable crystal structure, which achieves better cycle stability, thereby increasing the cycle life and service life of the battery.

In some embodiments of the present application, the compaction density of the positive electrode active material layer is 2.1 g/cm³ to 2.5 g/cm³, for example, 2.1 g/cm³, 2.2 g/cm³, 2.3 g/cm³, 2.4 g/cm³, 2.5 g/cm³, etc. Appropriately reducing the compaction density of the positive electrode active material layer facilitates the infiltration of the electrolytic solution, thereby enhancing the kinetic performance of the battery. Allowing the compaction density of the positive electrode active material layer to satisfy the given range improves the kinetic performance of the battery while taking into account the energy density of the battery.

In some embodiments of the present application, the single-side coating weight of the positive electrode active material layer is 0.25 g/1540.25 mm² to 0.3 g/1540.25 mm², for example, 0.25 g/1540.25 mm², 0.28 g/1540.25 mm², 0.3 g/1540.25 mm², etc. Thus, it is beneficial to reducing the polarization of the electrode sheet, thereby improving the kinetic performance of the battery.

In some embodiments of the present application, the compaction density of the negative electrode active material layer is 1.2 g/cm³ to 1.5 g/cm³, for example, 1.2 g/cm³, 1.3 g/cm³, 1.4 g/cm³, 1.5 g/cm³, etc. Appropriately reducing the compaction density of the negative electrode active material layer facilitates the infiltration of the electrolytic solution, thereby enhancing the kinetic performance of the battery. Allowing the compaction density of the negative electrode active material layer to satisfy the given range improves the kinetic performance of the battery while taking into account the energy density of the battery.

In some embodiments of the present application, the single-side coating weight of the negative electrode active material layer is 0.12 g/1540.25 mm² to 0.15 g/1540.25 mm², for example, 0.12 g/1540.25 mm², 0.13 g/1540.25 mm², 0.14 g/1540.25 mm², 0.15 g/1540.25 mm², etc. Thus, it is beneficial to reducing the polarization of the electrode sheet, thereby improving the kinetic performance of the battery.

In the present application, the single-side coating weight and the compaction density of the positive electrode active material layer are determined by the following method: A battery cell is disassembled to obtain a positive electrode sheet. For example, a single-side coated positive electrode sheet (if the sheet is a double-side coated electrode sheet, the positive electrode active material layer on one side thereof is first wiped off) is taken and punched into a small disc with an area of S1. The weight of the small disc is measured and recorded as M1, and the thickness H1 thereof is measured. Then, the positive electrode active material layer of the weighted positive electrode sheet is wiped off. The weight of the positive current collector is measured and recorded as M0, and the thickness H0 thereof is measured. The single-side coating weight of the positive electrode active material layer = (the weight of the positive electrode sheet M1 - the weight of the positive current collector M0) / S1, the thickness of the positive electrode active material layer = the thickness of the positive electrode sheet H1 - the thickness of the positive current collector H0, and the compaction density of the positive electrode active material layer = the single-side coating weight of the positive electrode active material layer / the thickness of the positive electrode active material layer. The single-side coating weight and compaction density of the negative electrode active material layer are also determined by the above method.

In some embodiments, the compaction density of the positive or negative electrode active material layer refers to a compaction density corresponding to a battery state of charge (SOC) of about 0%. The 0% SOC state is defined as a state corresponding to the following procedure: At ambient temperature, the battery cell is charged at a constant current of 1/3 C to 3.65 V, charged at a constant voltage of 3.65 V until the current reaches 0.05 C, and then discharged to 2.5 V at 1/3 C.

Generally, the positive electrode sheet further includes a positive electrode current collector, and the positive electrode active material layer is disposed on at least a portion of the surface of at least one side of the positive electrode current collector. The positive electrode current collector is a conventional metal foil or a composite current collector (a metal material is disposed on a polymer substrate to form a composite current collector). As an example, the positive electrode current collector includes at least one of a copper foil, an aluminum foil, a nickel foil, a stainless steel foil, a stainless steel mesh, and a carbon-coated aluminum foil.

In some embodiments of the present application, the positive electrode active material layer further optionally includes at least one of a binder and other optional auxiliary agents. The binder and the auxiliary agents are both common choices in the art. For example, the binder includes, but is not limited to, one or more of styrene butadiene rubber (SBR), water-based acrylic resin, polyvinylidene fluoride (PVDF), polytetrafluoroethylene (PTFE), ethylene-vinyl acetate (EVA) copolymer, polyacrylic acid (PAA), carboxymethyl cellulose (CMC), polyvinyl alcohol (PVA), and polyvinyl butyral (PVB). These materials are commercially available.

Generally, the negative electrode sheet further includes a negative electrode current collector, and the negative electrode active material layer is disposed on at least a portion of the surface of at least one side of the negative electrode current collector. The negative electrode current collector is conventional metal foil or a composite current collector (for example, a metal material is disposed on a polymer substrate to form a composite current collector). For example, the negative electrode current collector is a metal foil such as a copper foil.

In some embodiments of the present application, the negative electrode active material layer generally further includes a binder and a conductive agent. The conductive agent is used for increasing the electrical conductivity of the negative electrode active material layer. The binder is used for firmly binding the negative electrode active material and the binder to the negative electrode current collector. The types of the conductive agent and the binder for the negative electrode sheet are not particularly limited in the present application, and are selected according to actual needs. As an example, the conductive agent includes, but is not limited to, at least one of superconducting carbon, acetylene black, carbon black, Ketjen black, carbon dots, carbon nanotubes, graphene, and carbon nanofibers. As an example, the binder includes, but is not limited to, at least one of styrene-butadiene rubber (SBR), styrene-butadiene copolymers (SBCs), water-based acrylic resin, and carboxymethyl cellulose (CMC). In addition, the negative electrode active material layer further optionally includes a thickener, such as carboxymethyl cellulose (CMC). However, the present application is not limited thereto, and other materials that can be used as thickeners of the negative electrode sheet of the lithium-ion battery are also used in the present application.

In some embodiments of the present application, the battery cell further includes: an electrolytic solution. The electrolytic solution includes a solvent, the solvent includes a cyclic carbonate and a linear carbonate, and based on the total mass of the electrolytic solution, the mass percentage of the cyclic carbonate is 15% to 25%, and the mass percentage of the linear carbonate is 50% to 70%. For example, based on the total mass of the electrolytic solution, the mass percentage of the cyclic carbonate is 15%, 18%, 20%, 22%, 25%, etc.; and the mass percentage of the linear carbonate is 50%, 55%, 60%, 65%, 70%, etc. Appropriately reducing the content of the cyclic carbonate is beneficial to reducing the viscosity of the electrolytic solution and increasing the lithium-ion transport rate; and appropriately increasing the content of the cyclic carbonate is beneficial to increasing the dielectric constant of the electrolytic solution and reducing the migration resistance of lithium ions in the electrolytic solution. Thus, allowing the composition of the electrolytic solution to satisfy the given range is beneficial to enhancing the stability of the electrolytic solution, thereby improving the kinetic performance of the battery.

In some embodiments of the present application, the cyclic carbonate includes EC (ethylene carbonate) and/or PC (propylene carbonate), for example, EC.

In some embodiments of the present application, the linear carbonate includes one or more of EMC (ethyl methyl carbonate), DMC (dimethyl carbonate), and DEC (diethyl carbonate).

In some embodiments of the present application, the electrolytic solution further includes a lithium salt, and the concentration of the lithium salt is 0.6 mol/L to 1.2 mol/L, for example, 0.6 mol/L, 0.8 mol/L, 1 mol/L, or 1.2 mol/L. Illustratively, the lithium salt includes, but is not limited to, at least one of lithium hexafluorophosphate, lithium difluoro(oxalato)borate, lithium tetrafluoroborate, lithium bis(oxalato)borate, lithium perchlorate, lithium hexafluoroarsenate, lithium bis(fluorosulfonyl)imide, lithium trifluoromethanesulfonate, and lithium bis(trifluoromethanesulfonyl)imide. Appropriately increasing the concentration of the lithium salt increases the number of lithium ions and increases the ionic conductivity; and appropriately decreasing the concentration of the lithium salt is beneficial to reducing the viscosity of the electrolytic solution and improving the ion transport efficiency and ionic conductivity. Thus, allowing the concentration of the lithium salt to satisfy the given range is beneficial to achieving high ionic conductivity, thereby improving the kinetic performance of the battery. Optionally, the concentration of the lithium salt is 0.7 mol/L to 1 mol/L.

In some embodiments of the present application, the electrolytic solution further optionally includes an additive that can improve some performances of the battery. For example, the additive includes a negative electrode film-forming additive or a positive electrode film-forming additive, and further includes an additive that improves the overcharge performance of the battery, an additive that improves the high-temperature performance of the battery, an additive that improves the low-temperature performance of the battery, etc. Illustratively, the additive includes, but is not limited to, FEC (fluoroethylene carbonate) and/or VC (vinylene carbonate). The mass content of fluoroethylene carbonate in the electrolytic solution is 0.1% to 0.2%, for example, 0.1%, 0.12%, 0.15%, 0.18%, or 0.2%; and the mass content of vinylene carbonate in the electrolytic solution is 1% to 1.5%, for example, 1%, 1.1%, 1.2%, 1.3%, 1.4%, or 1.5%. Thus, it is beneficial to further improving the performance of the battery.

In some embodiments of the present application, the electrolytic solution includes one or more of a phosphorus-containing additive, a fluorine-containing additive, and a sulfur-containing additive. Thus, it is beneficial to further improving the performance of the battery.

In some embodiments of the present application, the battery cell further includes: a separator. Optionally, the separator is any known porous film having electrochemical stability and mechanical stability selected according to actual needs. For example, the separator includes, but is not limited to, a single-layer or multi-layer film including at least one of glass fiber, nonwoven fabric, polyethylene, polypropylene, and polyvinylidene fluoride.

In some embodiments, the separator is an uncoated separator. An uncoated separator not only features low costs, but also facilitates smoother lithium-ion conduction, thereby increasing ionic conductivity.

In some embodiments, the separator includes a base film. A coating is provided on at least one side of the base film.

Illustratively, the side of the base film facing the positive electrode sheet is provided with a ceramic coating containing an inorganic oxide. Illustratively, the inorganic oxide includes, but is not limited to, boehmite. Optionally, the ceramic coating further includes a binder. The binder includes, but is not limited to, an acrylate-based binder. Providing the ceramic coating containing an inorganic oxide is beneficial to enhancing the oxide resistance and high-temperature stability of the separator.

Illustratively, the side of the base film facing the negative electrode sheet is provided with an adhesive coating. Providing the adhesive coating is beneficial to saving internal space of the battery, thereby increasing the volumetric energy density of the battery. Optionally, the adhesive coating includes, but is not limited to, polyvinylidene fluoride (PVDF) and/or polymethyl methacrylate (PMMA).

In some embodiments of the present application, the thickness of the separator is 7 µm to 14 µm, for example, 7 µm, 8 µm, 9 µm, 10 µm, 11 µm, 12 µm, 13 µm, or 14 µm. Thus, it is beneficial to simultaneously taking into account the puncture strength of the separator and the energy density of the battery, thereby reducing the risk that the separator is easily penetrated by a dendrite due to a small thickness of the separator, or the risk that the energy density of the battery is reduced due to a large thickness of the separator. Optionally, the thickness of the separator is 10 µm to 12 µm.

In some embodiments of the present application, after the formation of the battery cell, based on the carbon content on the surface of the negative electrode sheet, the carbon content in the organic components is ≥ 60%. The carbon-containing organic components include, but are not limited to, alkyl lithium, lithium alkoxide, lithium alkyl ester, etc. XPS analysis is performed on the carbon element on the surface of the negative electrode sheet to obtain the carbon content in the organic components. Taking Li₂NiO₂ as an example, during the delithiation and decomposition of the lithium supplementing agent, oxygen undergoes a valence change to release oxygen free radicals. A small number of oxygen free radicals react with the carbonate-based electrolytic solution to generate protonated carbonate fragments, which are reduced at the negative electrode to form an organic SEI film. As a result, the ionic conductivity is increased, thereby enhancing the kinetic performance of the battery.

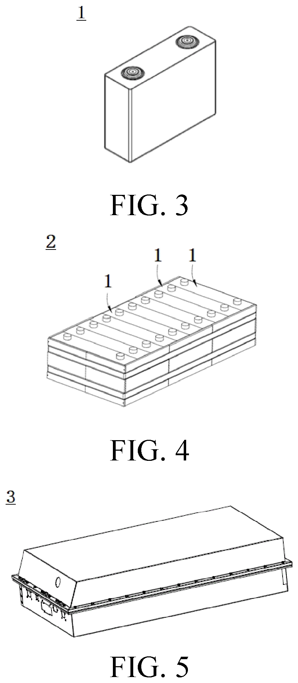

The embodiments of the present application do not particularly limit the shape of the battery cell. For example, in some embodiments of the present application, the battery is a pouch cell, a prismatic cell, or a cylindrical cell. For example, FIG. 3 shows a battery cell 1 having a prismatic structure as one example.

In some embodiments of the present application, the battery cell is a cylindrical battery. The cylindrical battery includes a housing. Two ends of the housing are respectively a first end and a second end. The first end is connected to the negative electrode sheet via a housing wall of the housing located at the first end. Illustratively, a tab of the negative electrode sheet is connected to the housing wall of the housing located at the first end via a first current collector portion. The second end is provided with a cap. The cap includes a terminal. The terminal is connected to the positive electrode sheet. Illustratively, a tab of the positive electrode sheet is connected to the terminal via a second current collector portion. Optionally, the cap is a steel cap. Providing the cap structure not only facilitates the connection of the cylindrical battery by means of welding via current collecting portions (such as a busbar), but also facilitates pressure relief after battery failure, thereby reducing the safety risk that may be caused by massive gas generation during thermal runaway in a high-nickel high-silicon battery system.

In some embodiments, the battery cell includes an outer packaging. The outer packaging is used for packaging the positive electrode sheet, the negative electrode sheet, and the electrolyte.

In some embodiments, the outer packaging includes a housing and a cover plate. The housing includes a bottom plate and side plates connected to the bottom plate. The bottom plate and the side plates define, in an enclosing manner, an accommodating cavity. The housing has an opening in communication with the accommodating cavity, and the cover plate lids the opening to close the accommodating cavity.

The positive electrode sheet, the negative electrode sheet, and the separator are subjected to a winding process or a stacking process to form an electrode assembly. The electrode assembly is packaged in the accommodating cavity. The number of electrode assemblies included in the battery cell is one or several, which is adjusted according to requirements.

In some embodiments, the outer packaging of the battery includes a hard shell, for example, a hard plastic shell, an aluminum shell, or a steel shell.

The outer packaging of the battery cell further includes a soft pack, for example, a pouch-type soft pack. The soft pack is made of plastic. For example, the plastic includes at least one of polypropylene (PP), polybutylene terephthalate (PBT), and polybutylene succinate (PBS).

A second aspect of the present application provides a battery device, including: the battery cell according to the first aspect of the present application. Optionally, the battery device includes at least one of a battery module, a battery package, and an energy storage device.

In some embodiments, the battery device is a battery cell or a battery module or battery pack assembled from battery cells. The number of battery cells included in the battery module or battery pack is multiple, and the specific number is adjusted according to the application and the capacity of the battery module.

FIG. 4 shows a battery module 2 as one example. Referring to FIG. 4, in the battery module 2, a plurality of battery cells 1 are sequentially arranged in the length direction of the battery module 2. Certainly, the plurality of battery cells is alternatively arranged in any other manner. Further, the plurality of battery cells 1 is fixed by means of fasteners. The battery module 2 further includes a shell having an accommodating space, in which the plurality of battery cells 1 are accommodated. In some embodiments, the above battery module is further assembled into a battery pack. The number of the battery modules included in the battery pack is adjusted according to the application and capacity of the battery pack.

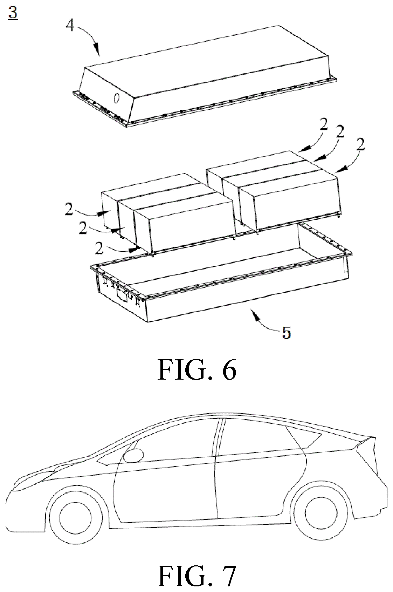

FIG. 5 and FIG. 6 show a battery pack 3 as one example. Referring to FIG. 5 and FIG. 6, the battery pack 3 includes a battery case and a plurality of battery modules 2 disposed in the battery case. The battery case includes an upper case body 4 and a lower case body 5. The upper case body 4 is capable of lidding the lower case body 5 to form a closed space for accommodating the battery modules 2. The plurality of battery modules 2 are arranged in any manner in the battery case.

A third aspect of the present application provides an electric device, including: the battery cell according to the first aspect of the present application or the battery device according to the second aspect of the present application. The battery cell or battery device is configured to provide electric energy.

Specifically, the battery cell or battery device is used as a power source of the electric device, and is alternatively used as an energy storage unit of the electric device. The electric device includes, but is not limited to, a mobile device (for example, a mobile phone or a laptop computer), an electric vehicle (for example, an all-electric vehicle, a hybrid electric vehicle, a plug-in hybrid electric vehicle, an electric bicycle, an electric scooter, an electric golf cart, or an electric truck), an electric train, a ship, a satellite, and an energy storage system.

FIG. 7 shows an electric device as one example. The electric device includes a pure electric vehicle, a hybrid electric vehicle, a plug-in hybrid electric vehicle, or the like. As another example, the electric device is a mobile phone, a tablet computer, or a laptop computer. The electric device is generally required to be light and thin, and a battery is thus used as a power source.

Hereinafter, examples of the present application are described. The embodiments described below are exemplary, and are only intended to explain the present application rather than being construed as a limitation to the present application. The examples in which specific technologies or conditions are not specified are implemented according to the technologies or conditions described in the literature in the art or according to product instructions. Reagents or instruments for which the manufacturer is not specified are all conventional commercially available products.

### Example 1

(1) Positive electrode sheet
   The positive electrode sheet included an aluminum foil as a positive electrode current collector. Two opposite surfaces of the aluminum foil were each provided with a positive electrode active material layer. The thickness of the aluminum foil was 13 µm, and the positive electrode active material layers disposed on the two surfaces of the aluminum foil were equal in thickness. The single-side coating weight of the positive electrode active material layer was 0.28 g/1540.25 mm². Based on the mass of the positive electrode active material layer, the positive electrode active material layer included the following components by mass percentage: 95.8% lithium iron phosphate, 2% Li₂NiO₂ as a lithium supplementing agent (the surface of the lithium supplementing agent is coated with aluminum oxide), 0.4% carbon black (Super P) as a conductive agent, and 1.8% polyvinylidene fluoride (PVDF) as a binder.
(2) Negative electrode sheet
   The negative electrode sheet included a copper foil as a negative electrode current collector. Two opposite surfaces of the copper foil were each provided with a negative electrode active material layer. The thickness of the copper foil was 6 µm, and the negative electrode active material layers disposed on the two surfaces of the copper foil were equal in thickness. The single-side coating weight of the negative electrode active material layer was 0.14 g/1540.25 mm². Based on the mass of the negative electrode active material layer, the negative electrode active material layer included the following components by mass percentage: 97.2% artificial graphite, 0.8% conductive agent (Super P), 0.8% styrene-butadiene rubber (SBR) as binder, and 1.2% sodium carboxymethyl cellulose (CMC-Na) as a thickener.
(3) Electrolytic solution:
   The electrolytic solution included a solvent, an electrolyte salt, and an additive, where the solvent was prepared from EC, DMC, and EMC in a mass ratio of 23:39:38; the electrolyte salt was LiPF₆, and the concentration of LiPF₆ in the electrolytic solution was 1 mol/L; and the additive included FEC and VC, the mass percentage of FEC in the electrolytic solution is 0.15%, and the mass percentage of VC in the electrolytic solution is 1.2%.
(4) Separator: A porous polypropylene film with a thickness of 12 µm.
(5) Battery cell: the battery cell included the above positive electrode sheet, negative electrode sheet, separator, and electrolytic solution.

### Performance test:

(1) Energy density test

At 25°C, the formed battery was charged at a constant current of 1/3 C to 3.65 V, and then charged at a constant voltage of 3.65 V until the current reached 0.05 C. After being left to stand for 5 min, the battery was discharged at 1/3 C to 2.5 V. The discharge capacity was recorded as C. After the size of the battery cell was measured and the volume of the battery cell was calculated as V, the volumetric energy density of the battery cell was obtained as 3.22 × C/V.

### (2) Energy efficiency test

At 25°C, the formed battery was left to stand for 30 min. Then, the battery was discharged at a constant current of 1/3 C to 2.5 V, and then charged at a constant power of 0.5 P to 3.65 V. The charging energy at this point was recorded as W_{c}. After being left to stand for 5 min, the battery was discharged at a constant power of 0.5 P to 2.5 V, and the discharging energy at this point was recorded as W_{d}.

The energy efficiency (%) of the battery was calculated according to the following formula: W_{d} / W_{c} × 100%.

### (3) Cycle performance test

At 25°C, the formed battery was left to stand for 30 min. Then, the battery was discharged at a constant current of 1/3 C to 2.5 V. Thereafter, a charge-discharge cycle was performed according to the following steps: The battery was left to stand for 5 min. Then, the battery was charged at a constant current of 1/3 C to 3.65 V, and then charged at a constant voltage until the current dropped to 0.05 C. The charge capacity at this point was recorded as C₀. After being left to stand for 5 min, the battery was discharged at a constant current of 1/3 C to 2.5 V. After 450 cycles, the discharge capacity at the 450th cycle was recorded as C₄₅₀. The capacity retention rate after 450 cycles was calculated according to the following formula:
$Capacity retention rate after 450 cycles \left(%\right) = {C}_{450} / {C}_{0} ′ \times 100 % .$

### Comparative Example 1

The negative electrode sheet and the electrolytic solution in the battery cell were the same as those in Example 1, with the difference that, in the positive electrode sheet, the positive electrode active material layer did not contain a lithium supplementing agent, but the total mass percentage of the positive electrode active material and the lithium supplementing agent in the positive electrode active material layer was the same as that in Example 1.

### Comparative Example 2

The negative electrode sheet and the electrolytic solution in the battery cell were the same as those in Example 1, with the difference that, in the positive electrode sheet, on a cross section in the thickness direction of the positive electrode sheet, the maximum diameter of only less than 50% by number of the positive electrode active material particles was smaller than the minimum diameter of the lithium supplementing agent particles.

### Comparative Example 3 and Comparative Example 4

The positive electrode sheet and the electrolytic solution in the battery cell were the same as those in Example 1, with the difference that the Dv90 particle size of graphite as the negative electrode active material in the negative electrode sheet was different.

The differences between Example 1 and Comparative Example 1 to Comparative Example 4 are shown in Table 1.

**Table 1**

| Item | Mass percentage of the lithium supplementing agent in the positive electrode active material layer / % | Whether, on a cross section in the thickness direction of the positive electrode sheet, the maximum diameter of over 50% by number of the positive electrode active material particles is smaller than the minimum diameter of the lithium supplementing agent particles | Dv90 particle size of graphite | Volumetric energy density of the battery cell | Energy efficiency / % | Capacity retention rate after 450 cycles at ambient temperature / % |
|---|---|---|---|---|---|---|
| Example 1 | 2.0 | Yes | 22 | 400 | 94.5 | 98.3 |
| Comparative Example 1 | 0.0 | Yes | 22 | 392 | 93.0 | 95.1 |
| Comparative Example 2 | 2.0 | No | 22 | 394 | 92.1 | 97.4 |
| Comparative Example 3 | 2.0 | Yes | 35 | 396 | 91.5 | 97.1 |
| Comparative Example 4 | 2.0 | Yes | 12 | 393 | 94.2 | 96.5 |

It can be seen from Example 1 and Comparative Example 1 to Comparative Example 4 that the battery cell proposed in the present application simultaneously has high energy efficiency and high cycle capacity retention rate. This indicates that in the present application, by means of incorporating a lithium supplementing agent into the positive electrode sheet, allowing the minimum diameter of the lithium supplementing agent particles to be greater than the maximum diameter of above half of the positive electrode active material particles, and controlling the Dv90 volume particle size of graphite as the negative electrode active material within an appropriate range, the volumetric energy density of the battery cell is increased, the energy efficiency and cycle performance of the battery cell are improved, and thus the service life of the battery cell is prolonged.

### Example 2, Example 3, and Example 4

The positive electrode sheet and the electrolytic solution in the battery cell were the same as those in Example 1, with the difference that the Dv90 particle size and the OI value of graphite in the negative electrode sheet were different.

### Example 5

The positive electrode sheet and electrolytic solution in the battery cell were the same as those in Example 1, with the difference that the OI value of graphite in the negative electrode sheet was different.

The differences between Example 1 and Example 2 to Example 5 are shown in Table 2.

**Table 2**

| Item | Dv90 particle size of graphite | OI value of graphite | Volumetric energy density of the battery cell | Energy efficiency / % | Capacity retention rate after 450 cycles at ambient temperature / % |
|---|---|---|---|---|---|
| Example 1 | 22 | 3 | 400 | 94.5 | 98.3 |
| Comparative Example 3 | 35 | 3.3 | 396 | 91.5 | 97.1 |
| Comparative Example 4 | 12 | 2.8 | 393 | 94.2 | 96.5 |
| Example 2 | 15 | 1.3 | 395 | 95.3 | 96.0 |
| Example 3 | 18 | 2 | 398 | 94.8 | 97.5 |
| Example 4 | 30 | 5 | 402 | 93.5 | 97.7 |
| Example 5 | 30 | 5.7 | 402 | 92.6 | 97.6 |

It can be seen from Example 1, Comparative Example 3 to Comparative Example 4, and Example 2 to Example 5 that appropriately reducing the volume particle size of graphite as the negative electrode active material is beneficial to improving the energy density, energy efficiency, and cycle performance of the battery. The possible reason for this may be that when the particle size of the negative electrode active material is large, the compaction density of the negative electrode active material layer is low, which affects the energy density of the battery cell. Appropriately reducing the volume particle size of the negative electrode active material is not only beneficial to increasing the compaction density of the negative electrode active material layer, but also beneficial to improving the deintercalation/intercalation efficiency of lithium ions in the negative electrode, thereby improving the kinetic performance of the battery cell. However, when the particle size of the negative electrode active material is small, the negative electrode active material exhibits a large specific surface area and high activity, resulting in a high probability of side reactions, which also tends to affect the energy density of the battery cell. Further, it can be seen from Example 4 and Example 5 that reducing the OI value of graphite is also beneficial to improving the energy efficiency and cycle capacity retention rate of the battery cell. The possible reason for this may be that when the OI value of graphite is low, it is further beneficial to the deintercalation/intercalation of lithium ions, which can improve the kinetic performance of the battery cell, thereby increasing the energy efficiency and cycle capacity retention rate of the battery cell. In summary, in the present application, controlling the volume particle size Dv90 and OI value of artificial graphite in the negative electrode sheet within appropriate ranges is further beneficial to enabling the battery cell to simultaneously have high energy density, high energy efficiency, and high cycle capacity retention rate, thereby prolonging the service life of the battery cell.

### Example 6

The negative electrode sheet and the electrolytic solution in the battery cell were the same as those in Example 1, with the difference that, in the positive electrode sheet, the coating weight of the positive electrode active material layer was different.

### Example 7

The positive electrode sheet and the electrolytic solution in the battery cell were the same as those in Example 1, with the difference that the coating weight of the negative electrode active material layer in the negative electrode sheet was different.

The differences between Example 1 and Example 5 and Example 6 are shown in Table 3.

**Table 3**

| Item | Coating weight of the positive electrode active material layer / g/1540.25 mm² | Dv90 particle size of graphite | OI value of graphite | Coating weight of the positive electrode active material layer / g/1540.25 mm² | Volumetric energy density of the battery cell | Energy efficiency / % | Capacity retention rate after 450 cycles at ambient temperature / % |
|---|---|---|---|---|---|---|---|
| Example 1 | 0.28 | 22 | 3 | 0.14 | 400 | 94.5 | 98.3 |
| Example 6 | 0.3 | 22 | 3 | 0.15 | 405 | 93.5 | 97.2 |
| Example 7 | 0.26 | 22 | 3 | 0.12 | 396 | 94.9 | 98.5 |

It can be seen from Example 1, Example 6 and Example 7 that, as the coating weight of the active material layers on the positive electrode sheet and the negative electrode sheet increases, the energy density of the battery cell also increases. However, the energy efficiency and cycle capacity retention rate of the battery cell are decreased compared with those in Example 1. The main reason for this may be that the increase in the coating weight of the active material layers leads to an increase in the thickness of the active material layers, which affects the internal resistance of the battery cell and prolongs the lithium ion transport path, thereby affecting the energy efficiency and cycle capacity of the battery cell. This indicates that controlling the coating weights of the positive electrode active material layer and the negative electrode active material layer within appropriate ranges is further beneficial to enabling the battery cell to simultaneously have high energy density and energy efficiency, and good cycle performance, thereby achieving a prolonged service life.

### Example 8

The negative electrode sheet and the electrolytic solution in the battery cell were the same as those in Example 1, with the difference that, in the positive electrode sheet, the type of the conductive agent in the positive electrode active material layer was different.

### Example 9 and Example 10

The negative electrode sheet and the electrolytic solution in the battery cell were the same as those in Example 1, with the difference that, in the positive electrode sheet, the content of the lithium supplementing agent in the positive electrode active material layer was different, but the total mass percentage of the positive electrode active material and the lithium supplementing agent in the positive electrode active material layer was the same as that in Example 1.

### Example 11

The negative electrode sheet and the electrolytic solution in the battery cell were the same as those in Example 1, with the difference that, in the positive electrode sheet, the type and content of the lithium supplementing agent in the positive electrode active material layer, and the coating material on the surface of the lithium supplementing agent were different, but the total mass percentage of the positive electrode active material and the lithium supplementing agent in the positive electrode active material layer was the same as that in Example 1.

The differences between Example 1 and Example 8, Example 9, Example 10 and Example 11 are shown in Table 4.

**Table 4**

| Item | Type of lithium supplementing agent in the positive electrode active material layer | Mass percentage of the lithium supplementing agent in the positive electrode active material layer / % | Coating material on the surface of the lithium supplementin g agent | Type of conductive agent in the positive electrode active material layer | Volumetric energy density of the battery cell | Energy efficiency / % | Capacity retention rate after 450 cycles at ambient temperature / % |
|---|---|---|---|---|---|---|---|
| Example 1 | Li₂NiO₂ | 2.0 | Aluminum oxide | Super P | 400 | 94.5 | 98.3 |
| Example 8 | Li₂NiO₂ | 2.0 | Aluminum oxide | Super P and carbon nanotubes in an equal mass ratio | 401 | 94.7 | 98.5 |
| Example 9 | Li₂NiO₂ | 1.5 | Aluminum oxide | Super P | 403 | 94.6 | 96.8 |
| Example 10 | Li₂NiO₂ | 2.4 | Aluminum oxide | Super P | 397 | 94.2 | 98.9 |
| Example 11 | Li₅FeO₄ | 1.2 | Carbon material | Super P | 401 | 93.7 | 97.9 |

It can be seen from Example 1 and Example 8 that after incorporating carbon nanotubes into conductive carbon black, the energy density, energy efficiency, and cycle capacity retention rate of the battery cell are all increased. This indicates that using a combination of conductive carbon black and an appropriate amount of carbon nanotubes as the positive conductive agent is further beneficial to prolonging the service life of the battery cell.

It can be seen from Example 1, Example 9, and Example 10 that as the amount of the lithium supplementing agent increases, the cycle capacity retention rate of the battery cell also increases. However, the energy density of the battery cell shows a trend of first increasing and then decreasing. The main reason for this may be that when the content of the lithium supplementing agent is high, the relative amount of the positive electrode active material is reduced, and the improvement effect of the lithium supplementing agent on the energy density of the battery cell is insufficient to compensate for the effect of the reduced amount of the positive electrode active material on the energy density of the battery cell. This indicates that appropriately increasing the amount of the lithium supplementing agent is beneficial to enabling the battery cell to simultaneously have high volumetric energy density, energy efficiency, and cycle capacity retention rate, and thus is beneficial to further prolonging the service life of the battery cell.

It can be seen from Example 1 and Example 11 that replacing the lithium supplementing agent in Example 1 with other lithium-rich materials also enables the battery cell to simultaneously have high volumetric energy density, high energy efficiency, and high cycle capacity retention rate, thereby prolonging the service life of the battery cell.

### Example 12, Example 13, and Example 14

The negative electrode sheet and the electrolytic solution in the battery cell were the same as those in Example 1, with the difference that, in the positive electrode sheet, the lithium supplementing agent contained a doping element.

### Example 15 and Example 16

The negative electrode sheet and the electrolytic solution in the battery cell were the same as those in Example 1, with the difference that, in the positive electrode sheet, the lithium supplementing agent contained a doping element, and the type of the coating material on the surface of the lithium supplementing agent was different.

The differences among Example 12 to Example 16 are shown in Table 6.

**Table 5**

| Item | Type of doping element X in the lithium supplementing agent | Content of element X in the lithium supplementing agent based on the mass of the lithium supplementing agent | Coating material on the surface of the lithium supplementing agent | Volumetric energy density of the battery cell | Energy efficiency / % | Capacity retention rate after 450 cycles at ambient temperature / % |
|---|---|---|---|---|---|---|
| Example 1 | No | 105 ppm of Al element | Aluminum oxide | 400 | 94.5 | 98.3 |
| Example 12 | Al | 400 ppm of Al element | Aluminum oxide | 401 | 94.7 | 98.5 |
| Example 13 | B | 300 ppm of B element and 110 ppm of Al element | Aluminum oxide | 400 | 94.8 | 98.3 |
| Example 14 | Zr | 600 ppm of Zr element and 103 ppm of Al element | Aluminum oxide | 400 | 94.2 | 98.5 |
| Example 15 | Al | 300 ppm of Al element | Lithium phosphide | 402 | 94.8 | 97.8 |
| Example 16 | Al and B | 255 ppm of Al element and 500 ppm of boron element | Lithium sulfide | 401 | 94.7 | 98.0 |

It can be seen from Example 1 and Example 12 to Example 16 that introducing an appropriate amount of a doping element into the lithium supplementing agent or forming other coating materials on the surface of the lithium supplementing agent can further regulate the energy efficiency or cycle performance of the battery cell, enabling the battery cell to simultaneously have high energy density, high energy efficiency, and high cycle capacity retention rate, thereby achieving a long service life.

Finally, it should be noted that the foregoing examples are only used to illustrate the technical solutions of the present application, rather than limit the same. Although the present application has been described in detail with reference to the foregoing examples, a person of ordinary skill in the art should understand that they may still make modifications to the technical solutions described in the foregoing examples, or make equivalent replacements to some or all technical features thereof. However, such modifications or replacements do not cause the essence of the corresponding technical solutions to depart from the scope of the technical solutions in the examples of the present application, and shall all fall within the scope of the claims and description of the present application. In particular, as long as there is no structural conflict, the technical features mentioned in the examples may be combined in any manner. The present application is not limited to the specific examples disclosed herein, but encompasses all technical solutions falling within the scope of the claims.

## Claims

1. A battery cell, comprising:
a positive electrode sheet comprising a positive electrode active material layer, wherein the positive electrode active material layer comprises a positive electrode active material and a lithium supplementing agent, and on a cross section in the thickness direction of the positive electrode sheet, the maximum diameter of over 50% by number of positive electrode active material particles is smaller than the minimum diameter of lithium supplementing agent particles;
a negative electrode sheet comprising a negative electrode active material layer, wherein the negative electrode active material layer comprises a negative electrode active material, a volume particle size distribution Dv90 of the negative electrode active material is 15 µm to 30 µm, and the negative electrode active material comprises graphite.

2. The battery cell according to claim 1, wherein an OI value of the graphite is 2 to 5.

3. The battery cell according to claim 1 or 2, wherein a volume average particle size Dv50 of the graphite is 6 µm to 12 µm.

4. The battery cell according to any one of claims 1 to 3, wherein the lithium supplementing agent comprises LiₓM1_{y}O_{z}, wherein 1 ≤ x ≤ 6, 1 ≤ y ≤ 6, 2 ≤ z ≤ 12, and M1 comprises one or more of an Na element, an Ni element, a Co element, an Mn element, an Al element, and an Fe element.

5. The battery cell according to any one of claims 1 to 3, wherein the lithium supplementing agent comprises one or more of Li₂NiO₂ and Li₅FeO₄.

6. The battery cell according to any one of claims 1 to 3, wherein the lithium supplementing agent comprises one or more of LiₙNiOₘ and LiₚFeO_{q}, wherein 0 ≤ n ≤ 2, 0 < m≤2,0<p≤5,and0<q≤4.

7. The battery cell according to any one of claims 1 to 3, wherein the lithium supplementing agent comprises one or more of NiOₘ and LiₚFeO_{q}, wherein 0 < m ≤ 2, 0 < p ≤ 1, and 0 < q ≤ 2.

8. The battery cell according to any one of claims 1 to 7, wherein a coating layer is provided on at least part of a surface of the lithium supplementing agent, and the coating layer comprises one or more of a C element, an Al element, a Zr element, a P element, and an S element.

9. The battery cell according to claim 8, wherein the coating layer comprises one or more of a carbon material, an aluminum oxide, a zirconium oxide, a lithium phosphide, and a lithium sulfide.

10. The battery cell according to any one of claims 1 to 9, wherein the lithium supplementing agent further comprises a doping element, and the doping element comprises one or more of an Al element, a Zr element, and a B element.

11. The battery cell according to claim 10, wherein based on a total mass of the lithium supplementing agent, contents of the Al element, the Zr element, and the B element in the lithium supplementing agent are each independently 50 ppm to 1000 ppm.

12. The battery cell according to any one of claims 1 to 11, wherein a compaction density of the positive electrode active material layer is 2.1 g/cm³ to 2.5 g/cm³.

13. The battery cell according to any one of claims 1 to 12, wherein a single-side coating weight of the positive electrode active material layer is 0.25 g/1540.25 mm² to 0.3 g/1540.25 mm².

14. The battery cell according to any one of claims 1 to 13, wherein a compaction density of the negative electrode active material layer is 1.2 g/cm³ to 1.5 g/cm³.

15. The battery cell according to any one of claims 1 to 14, wherein a single-side coating weight of the negative electrode active material layer is 0.12 g/1540.25 mm² to 0.15 g/1540.25 mm².

16. The battery cell according to any one of claims 1 to 15, further comprising: an electrolytic solution, wherein the electrolytic solution comprises a solvent, the solvent comprises a cyclic carbonate and a linear carbonate, and based on a total mass of the electrolytic solution, a mass percentage of the cyclic carbonate is 15% to 25%, and a mass percentage of the linear carbonate is 50% to 70%.

17. The battery cell according to claim 16, wherein the electrolytic solution further comprises a lithium salt, and a concentration of the lithium salt is 0.6 mol/L to 1.2 mol/L, optionally 0.7 mol/L to 1 mol/L.

18. The battery cell according to claim 16 or 17, wherein the electrolytic solution further comprises fluoroethylene carbonate and vinylene carbonate.

19. The battery cell according to claim 18, wherein a mass content of the fluoroethylene carbonate in the electrolytic solution is 0.1% to 0.2%, and a mass content of the vinylene carbonate in the electrolytic solution is 1% to 1.5%.

20. The battery cell according to any one of claims 1 to 19, further comprising: a separator, wherein the separator comprises a base film, and a coating is provided on at least one side of the base film.

21. The battery cell according to claim 20, wherein a thickness of the separator is 7 µm to 14 µm, optionally 10 µm to 12 µm.

22. The battery cell according to any one of claims 1 to 21, wherein the positive electrode active material comprises a polyanionic positive electrode active material.

23. The battery cell according to any one of claims 1 to 22, wherein the positive electrode active material layer further comprises: a conductive agent, and the conductive agent comprises one or more of conductive carbon black and carbon nanotubes.

24. The battery cell according to any one of claims 1 to 23, wherein the positive electrode active material comprises a lithium iron phosphate-based material.

25. A battery device, comprising the battery cell according to any one of claims 1 to 24, wherein the battery device comprises at least one of a battery module, a battery pack, and an energy storage device.

26. An electric device, comprising the battery cell according to any one of claims 1 to 24 or the battery device according to claim 25, wherein the battery cell or the battery device is configured to provide electric energy.
